# EUROPÄISCHE PATENTSCHRIFT

(11) **EP 2 004 430 B1**
(45) Veröffentlichungstag und Bekanntmachung des Hinweises auf die Patenterteilung: **24.10.2012**
(21) Anmeldenummer: 07722196.8
(22) Anmeldetag: 12.04.2007
(51) Int. Cl.: B60J 1/20

(54) **ROLLOANORDNUNG FÜR EIN FAHRZEUG**
BLIND ASSEMBLY FOR A VEHICLE
ENSEMBLE STORE POUR UN VÉHICULE

(30) Priorität: 13.04.2006 DE 102006017538
(43) Veröffentlichungstag der Anmeldung: 24.12.2008
(73) Patentinhaber: Webasto AG, 82131 Stockdorf (DE)
(72) Erfinder: BERGMILLER, Alexander, 86343 Koenigsbrunn (DE); POLLAK, Martin, 82178 Puchheim (DE); GLASL, Sebastian, 81549 München (DE); WÜRL, Robert, 82272 Moorenweis (DE); ROCKELMANN, Andreas, 81249 München (DE); KOSLOWSKI, Frank, 82272 Moorenweis (DE); KLOTZ, Steven, Henry, Commerce Township, MI 48382 (US); McCALL, Anthony, Rochester Hills MI48309 (US)
(74) Vertreter: Epping - Hermann - Fischer
(86) Internationale Anmeldenummer: PCT/DE2007/000638
(87) Internationale Veröffentlichungsnummer: WO 2007/118455

(56) Entgegenhaltungen:
- EP-A- 1 426 548
- EP-A- 1 584 509
- EP-A- 1 616 737
- EP-A- 1 669 537
- WO-A-2005/068236
- DE-A1- 19 739 919
- DE-B3- 10 253 816
- DE-C1- 10 122 570

## Beschreibung

Die vorliegende Erfindung betrifft eine Rolloanordnung für ein Fahrzeug gemäß dem Oberbegriff von Anspruch 1.

Rolloanordnungen zur Verwendung in einem Fahrzeug dienen beispielsweise als Schutz vor Sonneneinstrahlung unter einem festen Glaspanoramadach oder unter einem transparenten Schiebedeckel oder auch als Abdeckung für einen Stauraum. Um bei einer solchen Rolloanordnung die Rollobahn nicht nur in Längsrichtung zu spannen, sondern auch quer zur Ausziehrichtung, sind Rollosysteme bekannt, bei denen seitliche Führungen der Querspannung dienen. So beschreibt die DE 197 39 919 A1 eine Rolloanordnung, bei der die Seitenkanten einer Rollobahn so ausgebildet sind, dass sie in seitliche Führungsschienen eingreifen. Somit sind die Randbereiche der Rollobahn gegen Flatter- und Schwingungsbewegungen gesichert, da bei entsprechendem Abstand der beidseitigen Führungsschienen im Vergleich zur Breite der Rollobahn die Rollobahn quer zur Auszugsrichtung in Spannung gebracht werden kann. Im Fall der DE 197 39 919 A1 sind die Seitenkanten der Rollobahn hierzu mit Randversteifungen versehen, die zum Eingriff in abgewinkelte Führungsbereiche gegenüber der Ebene der Rollobahn abknickbar sind, jedoch zum Aufwickeln der Rollobahn auf das Wickelrohr in ihre gestreckte, unabgeknickte Flachlage rückführbar sind.

Bei einem Rollo gemäß dem Oberbegriff des Anspruchs 1 weisen die seitlichen Randbereiche der Rollobahn jeweils ein flaches Führungsband auf, dessen Grundfläche parallel zur Auszugsebene des Rollos geführt ist. Ein Verschwenken oder auch nur teilweises Wegknicken der Führungsbänder aus einer solchen Ebene heraus findet daher nicht statt.

Bei dem Rollosystem der DE 197 39 919 A1 ist zur Bewegung des Rollos ein Zugseil über einen Mitnehmer mit einem Querstab am Ende der Rollobahn fest verbunden. Dies hat den Nachteil, dass die Montage solcher Rolloanordnungen beim Zusammenbau eines Fahrzeugs oder beispielsweise eines Dachmoduls sowie die Demontage (zu Reparaturzwecken) schwierig ist.

Die DE 101 22 570 C1 offenbart ein Sonnenrollo für ein Fahrzeugdach mit einer unterhalb des Daches angeordneten und auf eine Wickelspule aufwickelbaren Rollobahn, deren gegenüberliegende Seitenränder in Rollo-Bewegungsrichtung an Führungsschienen verschiebbar geführt und in Querrichtung unter Vorspannung der Rollobahn gehalten sind. An den Führungsschienen geführte Eingriffselemente können an die Seitenränder der Rollobahn gekoppelt werden und halten die Rollobahn in Querrichtung unter Vorspannung.

Die EP 1 616 737 A1 offenbart eine Führungsschiene für ein Rollo eines Schiebedachsystems, mit einem Halteabschnitt, mittels dem die Führungsschiene an einem Fahrzeug befestigt werden kann, einem Führungsabschnitt, in dem das Rollo aufgenommen werden kann, und einem elastisch federnden Verbindungsabschnitt, der zwischen dem Halteabschnitt und dem Führungsabschnitt angeordnet ist.

Die WO 2007/068217 A1 offenbart eine Rollokupplung für ein Fahrzeugsonnendachrollo, wobei die Rollokupplung mindestens einen Rollobandaufnahmebereich und einen Zugspriegelanschlussbereich aufweist, und der Rollobandaufnahmebereich zur formschlüssigen Verbindung mit einem Rolloband eingerichtet ist.

Es ist Aufgabe der vorliegenden Erfindung, eine Rolloanordnung für ein Fahrzeug zu schaffen, bei welchem die oben genannten Nachteile vermieden werden.

Diese Aufgabe wird durch eine Rolloanordnung gemäß dem Anspruch 1 gelöst.

Bei der erfindungsgemäßen Lösung der Aufgabe gemäß dem Anspruch 1 weist eine Rollobahn mindestens eine Rollokupplung auf, mit der mindestens eines der Führungsbänder über einen Mitnehmer in lösbarem, formschlüssigen Eingriff steht und über die das Führungsband und mit dem die Rollobahn ausziehbar ist. Der Mitnehmer ist an dem Ende des Führungsbandes angebracht, welches der Ausziehrichtung des Rollos zugewandt ist. Der Mitnehmer weist Zapfen auf und das Führungsband weist Öffnungen auf, in welchen nach der Montage der Rolloanordnung die Zapfen des Mitnehmers aufgenommen sind. Durch die Verbindung mittels lösbarem, formschlüssigem Eingriff zwischen Führungsband und Rollokupplung ist gewährleistet, dass sowohl die Montage als auch im Bedarfsfall die Demontage der erfindungsgemäßen Rolloanordnung deutlich erleichtert wird. Unter formschlüssigem Eingriff ist hierbei zu verstehen, dass eine Kontur des Mitnehmers in eine entsprechende Gegenkontur der Rollokupplung lösbar eingreift.

Weitere bevorzugte Ausführungsformen der Erfindung ergeben sich aus den Unteransprüchen.

Bei einer bevorzugten Ausführungsform der Erfindung ergibt sich der formschlüssige Eingriff dadurch, dass die Kontur in Form mindestens einer Nut am Mitnehmer oder an der Rollokupplung ausgebildet ist, wobei die entsprechende Gegenkontur an der Rollokupplung bzw. dem Mitnehmer in Form eines passenden Vorsprungs ausgebildet ist. Vorzugsweise ist eine solche Nut quer zur Ausziehrichtung des Rollos vorgesehen, wobei der mit einer Nut versehene Mitnehmer oder die Rollokupplung hierbei insgesamt näherungsweise U-förmig ausgebildet sein können.

Um die Bauhöhe der Rolloanordnung möglichst gering zu halten, ist bei einer weiteren bevorzugten Ausführungsform der Erfindung der Mitnehmer mit einem flachen Querschnitt, d.h. mit geringer Höhe ausgebildet, wobei die Grundfläche des Mitnehmers parallel zur Grundfläche des Führungsbandes orientiert ist.

Um eine solche Rolloanordnung anzutreiben, ist bei weiteren bevorzugten Ausführungsformen die Rollokupplung mit einem Antriebskabel verbunden, durch welche beispielsweise ein Elektromotor die Rollokupplung und mit ihr den Mitnehmer bewegen kann.

Vorzugsweise ist die Rollokupplung zusammen mit dem Mitnehmer in einem gemeinsamen Führungskanal einer Führungsschiene so geführt ist, dass der formschlüssige Eingriff zwischen beiden aufrechterhalten wird. Hierbei ist die Geometrie des Führungskanals so gewählt, dass die mit dem Mitnehmer in Eingriff gebrachte Rollokupplung sich verschiebbar in dem Führungskanal bewegen kann, der Führungskanal jedoch nicht ausreichend Platz bietet, um den Mitnehmer und die Rollokupplung soweit voneinander weg zu bewegen, dass sich der Eingriff zwischen diesen beiden Bauteilen lösen kann.

Der Mitnehmer einer erfindungsgemäßen Rolloanordnung ist vorzugsweise am Ende des zugeordneten Führungsbandes angebracht und kann als Kunststoffsteil ausgeführt sein, welches an das Führungsband angespritzt ist. Zur Verbesserung der Haltekraft einer solchen Umspritzung am Führungsband kann das Führungsband in dem Bereich, in dem der Mitnehmer angespritzt ist, eine oder mehrere Öffnungen aufweisen, wobei im Bereich der Öffnung zusätzlich ein Grat oder eine Aufbiegung vorgesehen sein kann.

Alternativ zu einem Spritzprozess kann der Mitnehmer aber auch auf das Führungsband aufgeclipst werden, indem er zum Beispiel ein Filmscharnier aufweist oder zweiteilig ausgeführt ist. Bei solchen zweiteiligen Ausführungsformen des Mitnehmers kommt als Befestigungsprozess aber auch ein Klebeprozess oder ein Schweißprozess in Betracht.

Im Folgenden wird die Erfindung anhand der beigefügten Zeichnungen beispielhaft näher erläutert:
Dabei zeigen:
   - FIG. 1a: eine perspektivische Ansicht auf eine erfindungsgemäße Rolloanordnung mit einer Rollokupplung und einem Mitnehmer;
   - FIG. 1b: einen Querschnitt durch eine Führungsschiene mit erfindungsgemäßer Rollokupplung und einem Mitnehmer;
   - FIG. 2: einen Mitnehmer, der an ein Führungsband angespritzt ist;
   - FIG. 3a, 3b, 4a und 4b: jeweils ein Führungsband mit einer Öffnung, in dem Bereich, in dem ein Mitnehmer angespritzt werden soll;
   - FIG. 5: ein Führungsband mit einem Mitnehmer mit Filmscharnier zum Anclipsen an das Führungsband;
   - FIG. 6: einen zweiteilig ausgeführten Mitnehmer zum Anbringen an ein Führungsband; und
   - FIG. 7: einen einteilig ausgeführten Mitnehmer mit daran befestigtem Führungsband.

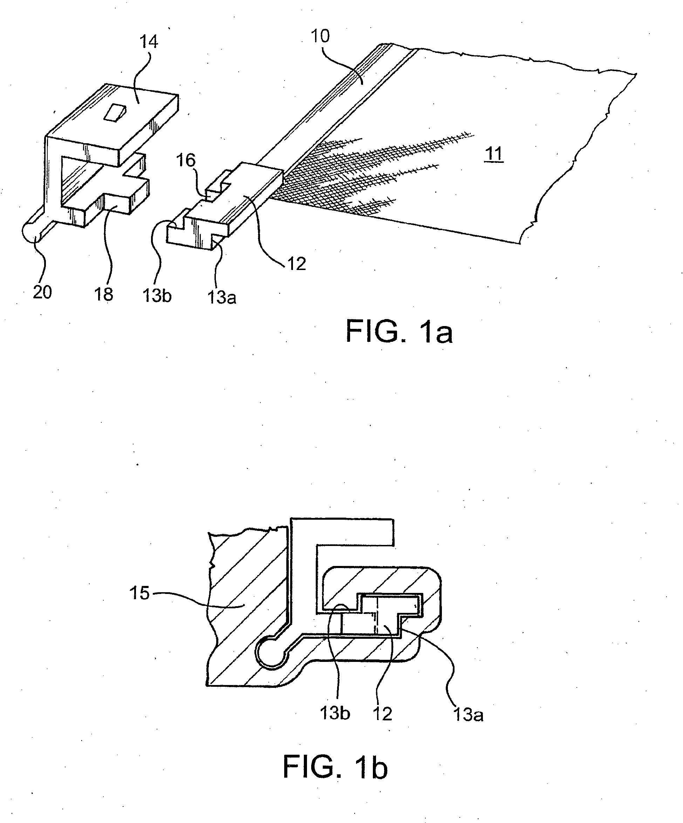

FIG. 1a zeigt ein Führungsband 10, welches an einer Rollobahn 11 so angebracht ist, dass seine Grundfläche parallel zu benachbarten Bereichen der Rollobahn verläuft. Am Ende des Führungsbands 10 ist ein Mitnehmer 12 angebracht, welcher mit einer Rollokupplung 14 eine lösbare, formschlüssige Verbindung eingehen kann. Rollokupplung 14 und Mitnehmer 12 sind lediglich zum besseren Verständnis separiert dargestellt, um die Form der beiden Bauteile leichter ersichtlich zu machen.

Der Mitnehmer 12 weist eine Nut 16 auf, in die in eingebautem Zustand ein entsprechend passendes Gegenstück in Form eines Vorsprungs 18 der Rollokupplung 14 der Rolloanordnung eingreift. Das Führungsband 10, der Mitnehmer 12 und die Rollokupplung 14 sind am Fahrzeug in einer Führungsschiene 15 (siehe FIG. 1b) verschiebbar gelagert, wobei vorzugsweise eine gemeinsame Profilschiene zur Führung von Mitnehmer und Rollokupplung verwendet wird. Damit der Mitnehmer 12 in einem gemeinsamen Führungskanal mit dem Vorsprung 18 dennoch unabhängig von der Rollokupplung 14 geführt werden kann, ist der Mitnehmer so ausgestaltet, dass er von der Führungsschiene entsprechend umfasst werden kann. Dies wird in der Ausführungsform der FIG. 1a dadurch gewährleistet, dass der Mitnehmer 12 zwei Einschnitte 13a und 13b aufweist, welche eine separate Führung des Mitnehmers unabhängig von der Rollokupplung 14 in einem gemeinsamen Führungskanal einer Führungsschiene gewährleisten. Dies ist weiter unten anhand der FIG. 1b näher erläutert. Die Rollokupplung 14 weist weiterhin eine Anbindung 20 für ein nicht dargestelltes Antriebselement wie z.B. ein drucksteif geführtes Kabel auf.

In der FIG. 1b ist ein Mitnehmer 12 zusammen mit einer Rollokupplung 14 im Querschnitt dargestellt, wobei Mitnehmer und Rollokupplung innerhalb einer Führungsschiene 15 geführt sind. Wie aus der Querschnittsdarstellung ersichtlich, führen die beiden Einschnitte 13a und 13b des Mitnehmers 12 dazu, dass die Führungsschiene 15 den Mitnehmer so weit umfassen und führen kann, dass dieser trotz der Eingriffsmöglichkeit der Rollokupplung in den Mitnehmer separat und spielfrei von der Führungsschiene geführt wird. Allgemein wird dies dadurch erreicht, dass Mitnehmer und Führungsschiene so ausgestaltet sind, dass der Mitnehmer unabhängig von der Rollokupplung die Führungsschiene nicht in Querrichtung verlassen kann.

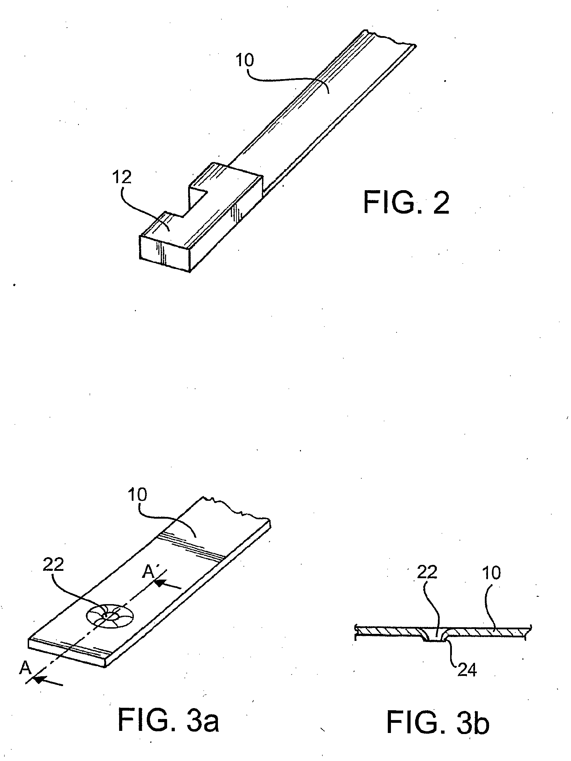

FIG. 2 zeigt eine weitere Ausführungsform eines Mitnehmers 12, der aus Kunststoff besteht und an ein Führungsband 10 angespritzt ist.

Um die Haltekräfte eines solchen angespritzten Mitnehmers 12 an einem Führungsband 10 weiter zu erhöhen, kann das Führungsband 10 im Bereich der Anspritzung mit einer Öffnung 22 versehen sein, wie sie in FIG. 3a dargestellt ist. Während des Anspritzprozesses des Mitnehmers (wie z.B. gemäß der FIG. 2) tritt Kunststoff durch die Öffnung 22 hindurch, wodurch eine bessere Fixierung eines Mitnehmers auf der Schiene 10 erreicht wird. Um diesen Effekt noch zu verbessern, kann die Öffnung 22, wie in FIG. 3b entlang des Schnittes A-A' der FIG. 3a geschnitten dargestellt, mit einem Grat 24 versehen sein, welcher einen angespritzten Mitnehmer noch besser gegen Abstreifen sichert.

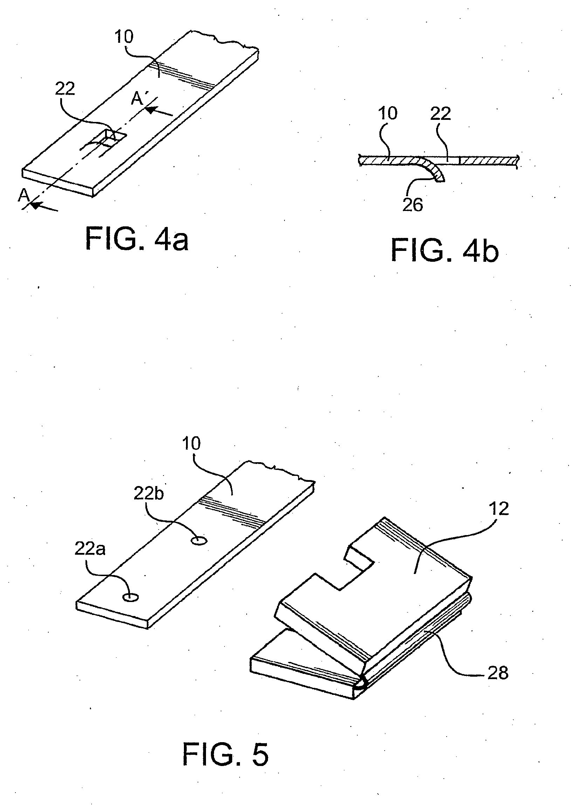

Eine alternative Lösung hierzu ist in den FIG. 4a und 4b gezeigt, wo ein Führungsband 10 eine Öffnung 22 aufweist, welche durch eine Aufbiegung 26 eines U-förmigen Schlitzes erzielt wird.

FIG. 5 zeigt eine alternative Form eines Mitnehmers 12, welcher mittels eines Filmscharniers 28 aufklappbar ausgeführt ist und (hier nicht zu sehende) Zapfen aufweist, die in montiertem Zustand Öffnungen 22a und 22b eines Führungsbands 10 durchdringen.

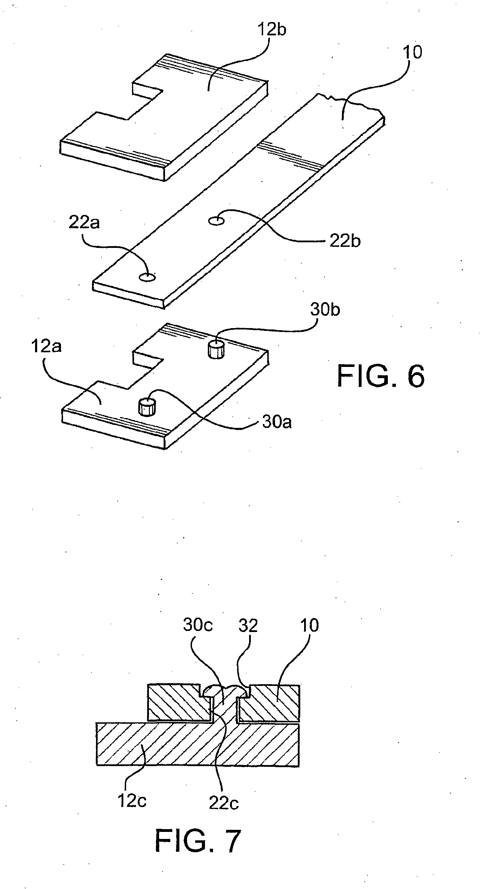

Ein Mitnehmer 12 kann wie in der FIG. 6 gezeigt auch zweiteilig ausgeführt sein mit einem Unterteil 12a und einem Oberteil 12b, wobei die beiden Teile durch Heißverprägen, Kleben, Clipsen, Ultraschallschweißen oder Hochfrequenzschweißen auf dem Führungsband 10 befestigt werden können. Die Verbindung wird dabei unter anderem durch zwei Zapfen 30a und 30b erreicht, welche durch Öffnungen 22a und 22b des Führungsbands10 hindurch treten und gleichzeitig ein Abstreifen des zweiteiligen Mitnehmers 12a, 12b vom Führungsband 10 verhindern. ,

Fig. 7 zeigt eine abgewandelte Ausführungsform, bei welcher der Mitnehmer 12c einteilig ausgeführt ist und mit dem Führungsband 10 mittels Zapfen 30c verbunden wird, die bei der Montage durch in dem Führungsband vorgesehene Löcher 22c geführt werden. Um ein ungewolltes Lösen des Mitnehmers vom Führungsband auch außerhalb der Führungsschiene zu gewährleisten, können die Zapfen 30c, nachdem sie durch die Öffnungen 22c des Führungsbands 10 eingeführt wurden, heißgestempelt oder heißverprägt werden, wobei zu diesem Zweck die Öffnungen 22c des Führungsbands 10 entlang ihrem im montierten Zustand nach außen weisenden Rand Aussparungen 32 aufweisen können, um die durch das Heißstempeln oder Heißverprägen verbreiterten Endbereiche der Zapfen 30c aufzunehmen.

Vorzugsweise ist der Mitnehmer so gestaltet, dass er an beiden Seiten der Rollanordnung eingesetzt werden kann. Beispielsweise bei der in der FIG. 6 gezeigten Ausführungsform lässt sich dies dadurch bewerkstelligen. dass der Mitnehmer in der axialen Richtung symmetrisch ausgeführt ist, so dass er sowohl in der gezeigten Stellung als auch in einer um 180° gedrehten Stellung mit einem Führungsband und anschließend mit einer Rollkupplung verbunden werden kann.

### Bezugszeichenliste

- 10: Führungsband
- 11: Rollobahn
- 12: Mitnehmer
- 12 a, b: Mitnehmer zweiteilig
- 12 c: Mitnehmer einteilig
- 13a, b: Einschnitte
- 14: Rollokupplung
- 15: Führungsschiene
- 16: Nut
- 18: Vorsprung
- 20: Anbindung
- 22, 22 a, b, c: Öffnung / Öffnungen
- 24: Grat
- 26: Aufbiegung
- 28: Filmscharnier
- 30 a, b, c: Zapfen
- 32: Aussparung

## Patentansprüche

1. Rolloanordnung für ein Fahrzeug mit einer Rollobahn (11), wobei die Rollobahn entlang beider seitlichen Randbereiche jeweils ein flexibles, flaches Führungsband (10) aufweist, welches entlang der Ausziehrichtung des Rollos in einer Führung geführt ist, um die Rollobahn aufzuspannen, und dessen Grundfläche parallel zu benachbarten Bereichen der Rollobahn geführt ist, **dadurch gekennzeichnet, dass** die Rolloanordnung mindestens eine Rollokupplung (14) aufweist, mit der mindestens eines der Führungsbänder über einen Mitnehmer (12) in lösbarem, formschlüssigem Eingriff steht und über die das Führungsband und mit ihm die Rollobahn ausziehbar ist, wobei der Mitnehmer (12) an dem Ende des Führungsbandes (10) angebracht ist, welches der Ausziehrichtung des Rollos zugewandt ist, und der Mitnehmer (12c) Zapfen (30c) aufweist und das Führungsband (10) Öffnungen (22c) aufweist, in welchen nach der Montage der Rolloanordnung die Zapfen (30c) des Mitnehmers (12c) aufgenommen sind.

2. Rolloanordnung gemäß Anspruch 1, **dadurch gekennzeichnet, dass** der Mitnehmer (12) oder die Rollokupplung mindestens eine Nut (16) aufweist, in die ein Vorsprung (18) der Rollokupplung oder des Mitnehmers eingreift und so die lösbare, formschlüssige Verbindung mit dem Mitnehmer eingeht.

3. Rolloanordnung gemäß Anspruch 2, **dadurch gekennzeichnet, dass** die Nut (16) quer zur Ausziehrichtung des Rollos verläuft.

4. Rolloanordnung gemäß Anspruch 2 oder 3, **dadurch gekennzeichnet, dass** der Mitnehmer (12) oder die Rollokupplung (14) im Wesentlichen u-förmig ausgebildet ist.

5. Rolloanordnung gemäß einem der vorhergehen Ansprüche, **dadurch gekennzeichnet, dass** der Mitnehmer (12) einen flachen Querschnitt aufweist und die Grundfläche parallel zur Grundfläche des Führungsbandes (10) orientiert ist.

6. Rolloanordnung gemäß einem der vorhergehenden Ansprüche, **dadurch gekennzeichnet, dass** die Rollokupplung (14) mit einem Antriebskabel in Verbindung steht.

7. Rolloanordnung gemäß einem der vorhergehenden Ansprüche, **dadurch gekennzeichnet, dass** die Rollokupplung (14) zusammen mit dem Mitnehmer (12) in einem gemeinsamen Führungskanal einer Führungsschiene (15) so geführt ist, dass der formschlüssige Eingriff zwischen beiden aufrechterhalten wird.

8. Rolloanordnung gemäß einem der vorhergehenden Ansprüche, **dadurch gekennzeichnet, dass** der Mitnehmer (12) aus einem Kunststoff besteht und am Führungsband (10) angespritzt ist.

9. Rolloanordnung gemäß Anspruch 8, **dadurch gekennzeichnet, dass** das Führungsband (10) in dem Bereich, in dem der Mitnehmer (12) angespritzt ist, eine Öffnung (22) aufweist, welche umspritzt ist und durch die der Kunststoff hindurch tritt.

10. Rolloanordnung gemäß Anspruch 9, **dadurch gekennzeichnet, dass** das Führungsband (10) im Bereich der Öffnung (22) einen Grat (24) oder eine Aufbiegung (26) aufweist.

11. Rolloanordnung gemäß einem der vorhergehenden Ansprüche 1 bis 7, **dadurch gekennzeichnet, dass** der Mitnehmer (12) ein Filmscharnier (28) aufweist und zur Montage auf dem Führungsband (10) an dieses aufclipsbar ist.

12. Rolloanordnung gemäß einem der vorhergehenden Ansprüche 1 bis 7, **dadurch gekennzeichnet, dass** der Mitnehmer (12a, b) im nicht montierten Zustand zweiteilig ausgeführt ist und zur Montage auf dem Führungsband an dieses geclipst, geklebt oder geschweißt wird.

13. Rolloanordnung gemäß einem der vorhergehenden Ansprüche 1 bis 7, **dadurch gekennzeichnet, dass** der Mitnehmer (12c) im nicht montierten Zustand einteilig ausgeführt ist und zur Montage an dem Führungsband an dieses geclipst, geklebt oder geschweißt wird.

14. Rolloanordnung gemäß einem der Ansprüche 1 bis 7 oder 13, **dadurch gekennzeichnet, dass** die Öffnung (22c) des Führungsbands (10) entlang ihrem im montierten Zustand nach außen weisenden Rand eine Aussparung (32) aufweist und der Zapfen (30c) des Mitnehmers (12c) aus Kunststoff gefertigt ist, wobei im Zuge der Montage das im Bereich der Aussparung (32) angeordnete frei Ende des Zapfens (30c) verformt wird, um die Aussparung (32) mindestens teilweise zu füllen.

## Claims

1. Blind assembly for a vehicle comprising a blind web (11), the blind web (11) being provided with one respective flexible, flat, guide strip (10) along both lateral edge zones, which guide strip is guided inside a guide along the direction of extension of the blind in order to stretch the blind web and its base is guided parallel to adjacent zones of the blind web, **characterized in that** the blind assembly has at least one blind coupling (14) with which at least one of the guide strips engages in a releasable positive manner via an entraining element (12) and via which the guide strip and, together therewith, the blind web can be extended, wherein the entraining element (12) is mounted on the end of the guide strip (10) which faces the direction of extension of the blind, and the entraining element (12c) has studs (30c) and the guide strip (10) has openings (22c) inside which, after assembly of the blind assembly, the studs (30c) of the entraining element (12) are received.

2. Blind assembly according to Claim 1, **characterized in that** the entraining element (12) or the blind coupling has at least one groove (16) inside which a projection (18) of the blind coupling or the entraining element engages and thus forms the releasable positive connection with the entraining element.

3. Blind assembly according to Claim 2, **characterized in that** the groove (16) extends transversely with respect to the direction of extension of the blind.

4. Blind assembly according to Claim 2 or 3, **characterized in that** the entraining element (12) or the blind coupling (14) is designed so as to be substantially U-shaped.

5. Blind assembly according to one of the preceding claims, **characterized in that** the entraining element (12) has a flat cross-section and the base is directed parallel to the base of the guide strip (10).

6. Blind assembly according to one of the preceding claims, **characterized in that** the blind coupling (14) is connected to a drive cable.

7. Blind assembly according to one of the preceding claims, **characterized in that** the blind coupling (14) together with the entraining element (12) is guided inside a common guide channel of a guide rail (15) in such a way that the positive engagement between them is maintained.

8. Blind assembly according to one of the preceding claims, **characterized in that** the entraining element (12) is made of plastic and is molded onto the guide strip (10).

9. Blind assembly according to Claim 8, **characterized in that** the guide strip (10) in the region where the entraining element (12) is molded onto it has an opening (22) which is overmolded and through which the plastic penetrates.

10. Blind assembly according to Claim 9, **characterized in that** the guide strip (10) has a burr (24) or a bent-open part (26) in the region of the opening (22).

11. Blind assembly according to one of the preceding Claims 1 to 7, **characterized in that** the entraining element (12) has a film hinge (28) and, for assembly on the guide strip (10), can be clipped onto the latter.

12. Blind assembly according to one of the preceding Claims 1 to 7, **characterized in that** the entraining element (12a,b) in the unassembled condition is designed as two parts and, for assembly on the guide strip, is clipped, glued or welded thereon.

13. Blind assembly according to one of the preceding Claims 1 to 7, **characterized in that** the entraining element (12c) in the unassembled condition is designed as one piece and, for assembly on the guide strip, is clipped, glued or welded thereon.

14. Blind assembly according to one of Claims 1 to 7 or 13, **characterized in that** the opening (22c) of the guide strip (10) has a recess (32) along its edge directed outwards in the assembled condition and the stud (30c) of the entraining element (12c) is made of plastic, during assembly the free end of the stud (30c) arranged in the region of the recess (32) being deformed in order to fill the recess (32) at least partially.

## Revendications

1. Agencement de store pour un véhicule, comprenant une bande de store (11), la bande de store présentant, le long des deux régions de bord latérales, à chaque fois une bande de guidage plane flexible (10), qui est guidée dans une coulisse le long de la direction de traction du store, afin de tendre la bande de store, et dont la surface de base est guidée parallèlement aux régions adjacentes de la bande de store, **caractérisé en ce que** l'agencement de store présente au moins un accouplement de store (14) avec lequel au moins l'une des bandes de guidage est en prise par engagement par correspondance géométrique détachable par le biais d'un dispositif d'entraînement (12) et par le biais duquel la bande de guidage, et avec elle la bande de store, peut être tirée, le dispositif d'entraînement (12) étant monté à l'extrémité de la bande de guidage (10) qui est tournée vers la direction de traction du store, et le dispositif d'entraînement (12c) présentant des tourillons (30c) et la bande de guidage (10) présentant des ouvertures (22c) dans lesquelles, après le montage de l'agencement de store, sont reçus les tourillons (30c) du dispositif d'entraînement (12c).

2. Agencement de store selon la revendication 1,**caractérisé en ce que** le dispositif d'entraînement (12) ou l'accouplement de store présente au moins une rainure (16) dans laquelle s'engage une saillie (18) de l'accouplement de store ou du dispositif d'entraînement, et qui crée ainsi la liaison par engagement par correspondance géométrique détachable avec le dispositif d'entraînement.

3. Agencement de store selon la revendication 2, **caractérisé en ce que** la rainure (16) s'étend transversalement à la direction de sortie du store.

4. Agencement de store selon la revendication 2 ou 3, **caractérisé en ce que** le dispositif d'entraînement (12) ou l'accouplement de store (14) est réalisé essentiellement en forme de U.

5. Agencement de store selon l'une quelconque des revendications précédentes, **caractérisé en ce que** le dispositif d'entraînement (12) présente une section transversale plane et la surface de base est orientée parallèlement à la surface de base de la bande de guidage (10).

6. Agencement de store selon l'une quelconque des revendications précédentes, **caractérisé en ce que** l'accouplement de store (14) est en liaison avec un câble d'entraînement.

7. Agencement de store selon l'une quelconque des revendications précédentes, **caractérisé en ce que** l'accouplement de store (14) est guidé, conjointement avec le dispositif d'entraînement (12), dans un canal de guidage commun d'un rail de guidage (15), de telle sorte que l'engagement par correspondance géométrique entre les deux soit maintenu.

8. Agencement de store selon l'une quelconque des revendications précédentes, **caractérisé en ce que** le dispositif d'entraînement (12) se compose d'un plastique et est moulé par pulvérisation sur la bande de guidage (10) .

9. Agencement de store selon la revendication 8, **caractérisé en ce que** la bande de guidage (10), dans la région dans laquelle le dispositif d'entraînement (12) est moulé par pulvérisation, présente une ouverture (22) qui est surmoulée et à travers laquelle passe le plastique.

10. Agencement de store selon la revendication 9, **caractérisé en ce que** la bande de guidage (10) présente, dans la région de l'ouverture (22), une bavure (24) ou un bord recourbé (26).

11. Agencement de store selon l'une quelconque des revendications 1 à 7, **caractérisé en ce que** le dispositif d'entraînement (12) présente une charnière à film (28) et peut être enclipsé sur la bande de guidage (10) en vue du montage de cette dernière.

12. Agencement de store selon l'une quelconque des revendications 1 à 7, **caractérisé en ce que** le dispositif d'entraînement (12a, b) est réalisé en deux parties dans l'état non monté et est enclipsé, collé ou soudé sur la bande de guidage en vue du montage de cette dernière.

13. Agencement de store selon l'une quelconque des revendications 1 à 7, **caractérisé en ce que** le dispositif d'entraînement (12c) est réalisé en une seule partie dans l'état non monté, et est enclipsé, collé ou soudé sur la bande de guidage en vue du montage de cette dernière.

14. Agencement de store selon l'une quelconque des revendications 1 à 7 ou 13, **caractérisé en ce que** l'ouverture (22c) de la bande de guidage (10) le long de son bord tourné vers l'extérieur dans l'état monté présente un évidement (32) et le tourillon (30c) du dispositif d'entraînement (12c) est fabriqué en plastique, l'extrémité libre du tourillon (30c) disposée au cours du montage dans la région de l'évidement (32) étant déformée, afin de remplir au moins en partie l'évidement (32).
